# FASCICULE DE BREVET EUROPEEN

(11) **EP 3 863 901 B1**
(45) Date de publication et mention de la délivrance du brevet: **27.08.2025**
(21) Numéro de dépôt: 19802242.8
(22) Date de dépôt: 02.10.2019
(51) Int. Cl.: B60T 17/02, F16D 65/807, F16D 65/847

(54) **SYSTÈME ET PROCÉDÉ DE REFROIDISSEMENT DES FREINS D'UN TRAIN D'ATTERRISSAGE D'UN AÉRONEF**
SYSTEM UND VERFAHREN ZUR KÜHLUNG DER BREMSEN EINES FLUGZEUGFAHRWERKS
SYSTEM AND METHOD FOR COOLING THE BRAKES OF LANDING GEAR OF AN AIRCRAFT

(30) Priorité: 10.10.2018 FR 1859378
(43) Date de publication de la demande: 18.08.2021
(73) Titulaire: Safran Electrical & Power, 31702 Blagnac Cedex (FR)
(72) Inventeur: FONTALBAT, Thierry, 31702 Blagnac Cedex (FR); CHALLAS, Florent, 31702 Blagnac Cedex (FR); ORLANDINI, Fabien, 31702 Blagnac Cedex (FR)
(74) Mandataire: Gevers & Orès
(86) Numéro de dépôt international: PCT/FR2019/052335
(87) Numéro de publication internationale: WO 2020/074805

(56) Documents cités:
- GB-A- 2 533 476
- US-A1- 2014 239 121
- US-A1- 2015 266 566

## Description

### DOMAINE TECHNIQUE

L'invention concerne un système et un procédé de refroidissement des freins d'un système de freinage d'un train d'atterrissage d'un aéronef.

L'invention concerne également un train d'atterrissage d'un aéronef comportant un système de freinage et un système de refroidissement des freins dudit système de freinage.

### ÉTAT DE LA TECHNIQUE

L'état de la technique comporte notamment les documents GB-A-2 533 476 et US-A1-2015/266566.

De façon connue, un aéronef est muni d'un système de freinage agencé au niveau du train d'atterrissage principal de l'aéronef et comportant des freins configurés pour ralentir, puis arrêter les roues du train d'atterrissage principal.

En fonctionnement, comme les freins s'échauffent, il est nécessaire de les refroidir. Pour cela, un système de ventilation des freins est monté sur le train d'atterrissage principal, au niveau de l'axe des roues.

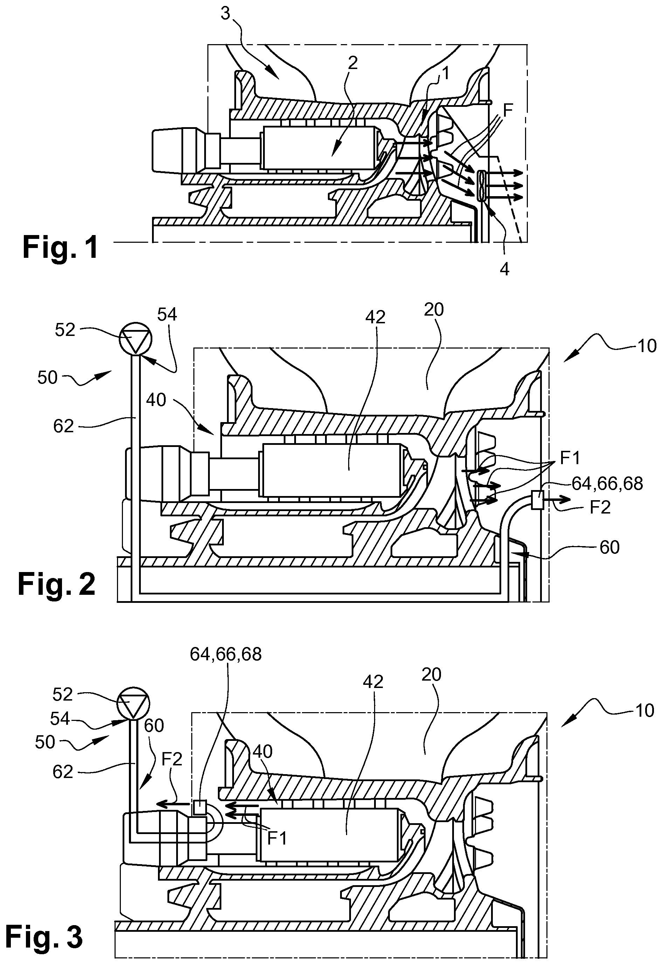

Un tel système de ventilation est par exemple représenté sur la figure 1, et comporte un ventilateur 4 (BCF, acronyme de l'expression anglaise « Brake Cooling Fan ») du côté extérieur de la jante 1 qui est configuré pour aspirer un flux d'air de sortie des freins 2, représenté par les flèches F, lorsque lesdits freins 2 sont activés pour ralentir, puis arrêter la roue 3 du train d'atterrissage principal, et également lors de la phase d'arrêt à la porte d'embarquement. Ainsi, le ventilateur BCF permet de refroidir les freins 2, tant qu'ils sont à une température supérieure à 300°C. Lors de cette phase la température de l'air aspiré peut atteindre 170°C.

Toutefois, un ventilateur BCF est volumineux, ce qui entraîne des problèmes d'encombrement au niveau du train d'atterrissage principal de l'aéronef.

Il existe donc un besoin d'un système permettant le refroidissement des freins d'un système de freinage d'un train d'atterrissage d'un aéronef, tout en réduisant la masse et l'encombrement d'un tel système au sein de l'aéronef.

La présente invention a notamment pour but d'apporter une solution simple, économique et efficace à ces problèmes, permettant d'éviter les inconvénients de la technique connue.

### OBJECTIF DEL'INVENTION

La présente invention a pour objectif de proposer un système et un procédé permettant de refroidir les freins d'un système de freinage d'un train d'atterrissage d'un aéronef.

### EXPOSÉ DE L'INVENTION

A cet effet, l'invention concerne un système de refroidissement des freins d'un système de freinage d'un train d'atterrissage d'un aéronef, comprenant :
- un compresseur configuré pour générer un flux d'air sous pression, ledit compresseur comprenant au moins une sortie d'air, et
- une trompe à air comprenant :
   - un tube de trompe comprenant une première extrémité reliée à ladite sortie d'air et une deuxième extrémité, ledit tube de trompe étant conformé pour acheminer ledit flux d'air sous pression entre les première et deuxième extrémités, et
   - une pluralité d'injecteurs reliée à ladite deuxième extrémité du tube de trompe, et configurée pour injecter ledit flux d'air sous pression.

Selon l'invention, la pluralité d'injecteurs comprend un injecteur central agencé dans le prolongement de la deuxième extrémité du tube de trompe et une pluralité d'injecteurs intermédiaires agencés sur 360° autour dudit injecteur central.

En particulier, les injecteurs peuvent être agencés dans une zone à proximité des freins et configurés pour injecter un flux d'air sous pression dans la zone à proximité des freins lorsque le système de refroidissement est installé dans un train d'atterrissage.

Le système de refroidissement selon l'invention permet avantageusement de résoudre le problème d'encombrement du système de refroidissement des freins du train d'atterrissage de l'aéronef selon l'art antérieur. En particulier, le système de refroidissement selon l'invention permet avantageusement de réaliser la fonction du ventilateur BCF de l'art antérieur pour refroidir les freins tout en diminuant l'encombrement et la masse par rapport à ce dernier.

En fonctionnement du système de refroidissement, le compresseur génère un flux d'air sous pression. La pression du flux d'air généré par le compresseur est transformée en vitesse élevée du flux d'air dans les injecteurs à la deuxième extrémité dudit tube de trompe. À la sortie de la trompe à air, la vitesse élevée du flux d'air engendre une pression statique faible dans la zone d'éjection de l'air, c'est-à-dire dans la zone à proximité des freins, ce qui va forcer le phénomène de déplacement de l'air chaud provenant des freins, et donc permettre une aspiration du flux d'air provenant des freins. Ainsi, le système de refroidissement selon l'invention permet d'aspirer le flux d'air à température élevée (environ 170°C) venant des freins en direction de l'extérieur, ce qui qui permet de les refroidir. Selon l'invention, c'est donc le débit supplémentaire engendré par les injecteurs qui permet de refroidir les freins (par effet venturi), et non pas directement le flux d'air sous pression émis par le compresseur.

Le compresseur est configuré pour aspirer de l'air extérieur au système de refroidissement.

De préférence, à l'installation, le compresseur est agencé à distance de la zone à proximité des freins. Autrement dit, le compresseur peut être déporté de la zone à proximité des freins, c'est-à-dire déporté de la zone d'échauffement des freins.

Le compresseur peut être un compresseur à roues, à paliers, à palettes, à vis, ou à pistons.

Le compresseur peut être un compresseur électrique.

Le compresseur peut être configuré pour générer un flux d'air sous pression avec un débit variable.

Le compresseur peut être configuré pour générer un flux d'air sous pression. En particulier, le compresseur peut être configuré pour générer un flux d'air à haute pression.

La section du tube de trompe peut être circulaire, ou ovale, ou polygonale, ou annulaire ou quelconque.

La vitesse élevée du flux d'air engendre une dépression à proximité de la zone d'échauffement des freins.

Le tube de trompe comporte une pluralité d'injecteurs, de préférence agencés dans une zone à proximité des freins lorsque le système de refroidissement est installé dans un train d'atterrissage. Autrement dit, le tube de trompe comporte une pluralité d'injecteurs agencés à proximité de la zone d'échauffement des freins.

La pluralité d'injecteurs peut être agencée circonférentiellement et centrée sur la deuxième extrémité du tube de trompe.

La pluralité d'injecteurs peut également comprendre une pluralité d'injecteurs externes agencés sur 360° autour desdits injecteur intermédiaires.

La pluralité d'injecteurs externes et la pluralité d'injecteurs intermédiaires peuvent être agencées en quinconce autour de la deuxième extrémité du tube de trompe.

Un ou chaque injecteur et/ou le tube de trompe peuvent être en forme de coude. En particulier, la pluralité d'injecteurs intermédiaires et/ou la pluralité d'injecteurs externes peuvent être de forme coudée.

La pluralité d'injecteurs peut comprendre une première portion s'étendant sensiblement perpendiculairement à la deuxième extrémité du tube de trompe et une deuxième portion s'étendant sensiblement parallèlement à la deuxième extrémité du tube de trompe.

La section interne d'un ou de chaque injecteur peut être circulaire, ou ovale, ou polygonale, ou quelconque.

La section interne d'un ou de chaque injecteur peut varier le long du trajet du flux d'air sous pression. De façon avantageuse, la variation de la section interne des injecteurs permet d'augmenter la vitesse du flux d'air en sortie de la trompe à air. En particulier, la variation de section entre les injecteurs et le tube de trompe permet une augmentation locale de la vitesse de l'air qui génère une dépression de pression statique.

Un ou chaque injecteur peut présenter une restriction de section le long du trajet du flux d'air sous pression. En particulier, la restriction de section permet d'augmenter la vitesse du flux d'air en sortie d'un ou de chaque injecteur.

De préférence, les variations de section d'un ou de chaque injecteur sont continues.

Selon un premier mode de réalisation, la deuxième extrémité du tube de trompe est agencée du côté extérieur d'une jante de la roue.

Selon un deuxième mode de réalisation, la deuxième extrémité du tube de trompe est agencée du côté intérieur d'une jante de la roue.

L'invention concerne également un train d'atterrissage d'un aéronef comportant :
- au moins une roue, et
- un système de freinage comprenant des freins adaptés pour ralentir ou arrêter la rotation de ladite au moins une roue,
caractérisé en ce qu'il comprend également un système de refroidissement selon l'invention.

Le système de refroidissement des freins assure une ventilation des freins, ce qui permet avantageusement de réduire le temps d'escale de l'aéronef.

Le train d'atterrissage de l'aéronef peut être le train d'atterrissage principal de l'aéronef.

Le train d'atterrissage peut comporter un moteur électrique de traction de l'aéronef, qui est configuré pour entraîner la ou les roues du train d'atterrissage en rotation. Dans ce cas, le système de refroidissement des freins selon l'invention peut également refroidir le moteur électrique de traction de l'aéronef. Ainsi, le système de refroidissement selon l'invention peut refroidir à la fois les freins et le moteur électrique de traction de l'aéronef. En particulier, c'est la réunion de l'air extérieur, de l'air sous pression issu du compresseur et de l'air sous pression issu des injecteurs qui permet de refroidir le moteur électrique de traction de l'aéronef.

Selon un premier mode de réalisation, chaque injecteur est agencé du côté extérieur d'une jante de la roue. Autrement dit, chaque injecteur est agencé à l'extérieur d'une jante de la roue.

Selon un deuxième mode de réalisation, chaque injecteur est agencé du côté intérieur d'une jante de la roue. Autrement dit, chaque injecteur est agencé à l'intérieur d'une jante de la roue (20).

L'invention concerne en outre un procédé de refroidissement des freins d'un système de freinage d'un train d'atterrissage d'un aéronef selon l'invention, comprenant les étapes consistant en :
- une compression, au moyen du compresseur, d'un flux d'air de manière à générer un flux d'air sous pression,
- un acheminement du flux d'air sous pression, au moyen du tube de trompe, jusqu'à une zone à proximité des freins,
- une injection, au moyen de chaque injecteur, du flux d'air sous pression dans ladite zone à proximité des freins, et
- une aspiration d'un flux d'air de ladite zone à proximité des freins.

En particulier, l'injection du flux d'air sous pression dans la zone à proximité des freins permet d'engendrer une dépression dans ladite zone à proximité des freins.

L'aspiration du flux d'air de la zone à proximité des freins résulte de la dépression engendrée dans la zone à proximité des freins.

Au sens de l'invention, la zone à proximité des freins correspond à une zone située à une distance comprise entre 0,2 m et 2,0 m des freins. Autrement dit, la distance entre la deuxième extrémité du tube de trompe, et plus précisément les injecteurs, et les freins est comprise entre 0,2 m et 2,0 m.

L'étape de compression peut être une compression d'un flux d'air de manière à générer un faible débit d'air à haute pression.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1, décrite précédemment, est une vue schématique en coupe d'une partie d'un train d'atterrissage d'un aéronef selon l'art antérieur,
- la figure 2 est une vue schématique en coupe d'une partie d'un train d'atterrissage d'un aéronef selon un premier mode de réalisation de l'invention,
- la figure 3 est une vue schématique en coupe d'une partie d'un train d'atterrissage d'un aéronef selon un deuxième mode de réalisation de l'invention,
- la figure 4 est une vue schématique en perspective d'une pluralité d'injecteurs d'un système de refroidissement selon l'invention,
- la figure 5 est une vue schématique en coupe d'un injecteur de la pluralité d'injecteurs d'un système de refroidissement selon l'invention, et
- la figure 6 est un organigramme des étapes du procédé de refroidissement des freins d'un système de freinage d'un train d'atterrissage d'un aéronef selon l'invention.

### DESCRIPTION DÉTAILLÉE

Les figures 2 et 3 représentent un train d'atterrissage 10 d'un aéronef selon des modes de réalisation de l'invention. Le train d'atterrissage peut être, par exemple, un train d'atterrissage principal d'un aéronef, et comporte au moins une roue 20 et un système de freinage 40.

Le système de freinage 40 comprend des freins 42 adaptés pour ralentir, puis arrêter, la rotation de la roue 20. Les freins 42 peuvent être des freins à disques, par exemple des freins réalisés en carbone.

En fonctionnement, les freins 42 chauffent, de sorte qu'un flux d'air F1 à température élevée, notamment entre 150°C et 200°C, par exemple à environ 170°C, est généré au niveau des freins 42, et plus précisément dans une zone dite à proximité des freins.

En général, un train d'atterrissage 10 comporte de deux roues à six roues 20. Le système de freinage 40 peut alors comporter des freins 42 agencés sur chaque roue 20.

Le train d'atterrissage 10 comporte également un système de refroidissement 50 des freins 42.

Le système de refroidissement 50 comprend un compresseur 52 configuré pour générer un flux d'air, représenté par la flèche F2, sous pression. Le compresseur 52 comprend au moins une sortie d'air 54.

Le compresseur 52 peut être configuré pour générer un flux d'air F2 sous pression à travers la sortie d'air 54 avec un débit faible.

Le compresseur 52 peut être configuré pour générer un flux d'air F2 sous pression à travers la sortie d'air 54 avec une pression élevée.

Autrement dit, le compresseur 52 est configuré pour générer un flux d'air F2 à faible débit et à haute pression.

Le compresseur 52 peut être un compresseur à roues, ou à paliers, ou à palettes, ou à vis, ou encore à pistons. Le compresseur 52 peut être un compresseur électrique.

Le compresseur 52 est agencé à distance de la zone à proximité des freins 42. Autrement dit, le compresseur est déporté de la zone à proximité des freins 42.

Le système de refroidissement 50 comprend également une trompe à air 60.

La trompe à air 60 comprend un tube de trompe 62 et une pluralité d'injecteurs 64, 66, 68.

Le tube de trompe 62 est une canalisation, et comprend une première extrémité reliée à la sortie d'air 54 du compresseur 52 et une deuxième extrémité reliée aux injecteurs 64, 66, 68.

Le tube de trompe 62 est conformé pour acheminer le flux d'air F2 sous pression entre ses première et deuxième extrémités.

La section du tube de trompe 62 peut être ovale, ou polygonale, ou annulaire, ou quelconque ou de préférence circulaire.

Le tube de trompe 62 peut comprendre au moins un coude. Par exemple, sur les figures 2 et 3, le tube de trompe 62 comporte trois coudes.

Le tube de trompe 62 est configuré pour acheminer la haute pression générée par le compresseur 52 de la sortie d'air 54 vers l'injecteur 64, 66, 68.

Les injecteurs 64, 66, 68 sont agencés dans la zone à proximité des freins 42. Ainsi, le compresseur 52 est relié fluidiquement à la zone à proximité des freins 42 par la trompe à air 60.

Les injecteurs 64, 66, 68 sont configurés pour injecter le flux d'air F2 sous pression dans la zone à proximité des freins 42.

Le flux d'air F2 sous pression injecté dans la zone à proximité des freins constitue un flux d'air primaire, et le flux d'air F1 provenant des freins constitue un flux d'air secondaire. Le débit du flux d'air primaire est inférieur au débit du flux d'air secondaire, tandis que la vitesse du flux d'air primaire est supérieure à la vitesse du flux d'air secondaire. Autrement dit, le flux d'air F2 sous pression a un débit inférieur et une vitesse supérieure à ceux du flux d'air F1 provenant des freins.

À la sortie de la trompe à air 60, la vitesse importante du flux d'air F2 sous pression engendre, dans la zone à proximité des freins 42, une dépression. Cette dépression entraine un phénomène d'aspiration de l'air chaud provenant des freins 42. En effet, le flux d'air F1 à température élevée (environ 170°C) venant des freins 42 est alors aspiré, ce qui permet un refroidissement des freins 42. Autrement dit, le flux d'air primaire, injecté avec une vitesse élevée, va forcer le déplacement du flux d'air secondaire, et entrainer ledit flux secondaire hors de la zone à proximité des freins 42.

Selon un premier mode de réalisation représenté en figure 2, la deuxième extrémité du tube de trompe 62 est agencée à l'extérieur de la jante de la roue 20, le flux d'air provenant des freins s'écoulant vers l'extérieur.

Selon un deuxième mode de réalisation représenté en figure 3, la deuxième extrémité du tube de trompe 62 est agencée vers l'intérieur de la jante de la roue 20.

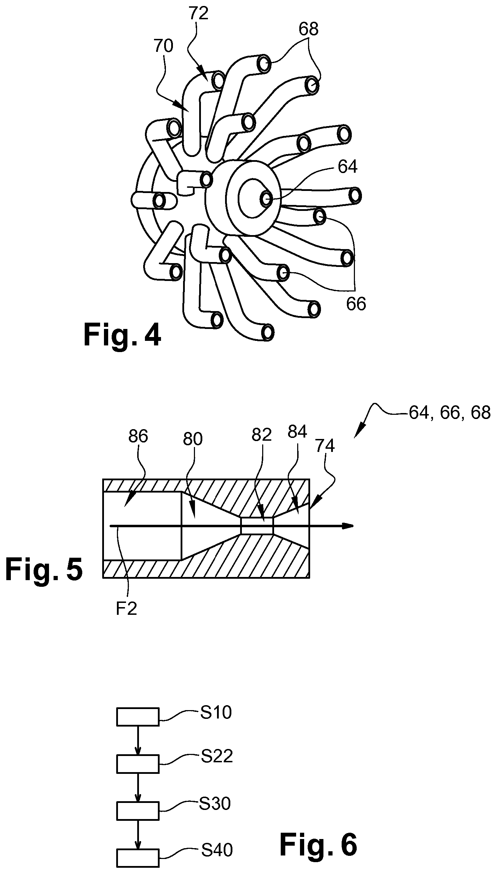

La figure 4 représente une pluralité d'injecteurs 64, 66, 68.

Les injecteurs peuvent comprendre un injecteur central 64 agencé dans le prolongement de la deuxième extrémité du tube de trompe 62, des injecteurs intermédiaires 66 agencés sur 360° autour de l'injecteur central 64 et des injecteurs externes 68 agencés sur 360° autour des injecteurs intermédiaires 66. Bien entendu, il ne peut y avoir que l'injecteur central 64 et les injecteurs intermédiaires 66 ou externes 68.

Les injecteurs 64, 66, 68 peuvent être agencés circonférentiellement et centrés sur la deuxième extrémité du tube de trompe 62. Par exemple, les injecteurs externes 68 sont agencés de façon circonférentielle autour des injecteurs intermédiaires 66, qui sont agencés de façon circonférentielle autour de l'injecteur central 64.

Les injecteurs externes 68 et les injecteurs intermédiaires 66 peuvent être agencées en quinconce autour de la deuxième extrémité du tube de trompe 62. Les injecteurs externes 68 peuvent être agencés dans des secteurs angulaires différents des secteurs angulaires dans lesquels sont agencés les injecteurs intermédiaires 66. Bien entendu, les injecteurs externes 68 et les injecteurs intermédiaires 66 peuvent être agencés dans les mêmes secteurs angulaires.

Les injecteurs intermédiaires 66 et externes 68 peuvent être en forme de coude. Plus précisément, les injecteurs intermédiaires 66 et externes 68 peuvent comprendre une première portion 70 s'étendant sensiblement perpendiculairement, c'est-à-dire radialement, à la deuxième extrémité du tube de trompe 62 et une deuxième portion 72 s'étendant sensiblement parallèlement à la deuxième extrémité du tube de trompe 62.

La figure 5 représente plus précisément un injecteur 64, 66, 68.

Chaque injecteur 64, 66, 68 comporte un orifice de sortie d'air 74, de section circulaire, comme représenté sur la figure 4, ou ovale, ou encore polygonale. La section des orifices de sortie des injecteurs 64, 66, 68 peut être identique. La section de l'orifice de sortie 74 de l'injecteur central 64 peut être différente de celle des injecteurs intermédiaires 66 ou externes 68. La section des orifices de sortie 74 des injecteurs intermédiaires 66 peut être différente de celle des injecteurs externes 68. La section d'un orifice de sortie 74 d'un injecteur intermédiaire 66 peut être différente de la section d'un orifice de sortie 74 d'un autre injecteur intermédiaire 66. De même, la section d'un orifice de sortie 74 d'un injecteur externe 68 peut être différente de la section d'un orifice de sortie 74 d'un autre injecteur externe 68.

La section externe des injecteurs 64, 66 68, c'est-à-dire la section de la partie des injecteurs 64, 66 68 qui est contact avec l'air de la zone à proximité des freins 42, peut être constante le long du trajet du flux d'air F2 sous pression.

La section interne des injecteurs 64, 66, 68, c'est-à-dire la section de la partie des injecteurs 64, 66, 68 qui est en contact avec le flux d'air F2 sous pression, peut varier le long du trajet du flux d'air F2 sous pression.

Les injecteurs 64, 66, 68 peuvent comporter une première section 80 dont le diamètre interne diminue le long du trajet du flux d'air F2 sous pression.

Le diamètre interne de la première section 80 varie de façon progressive.

Ainsi, la première section 80 des injecteurs 64, 66, 68 a une forme tronconique. Autrement dit, la première section 80 forme une partie conique convergente dans le sens du flux d'air F2 sous pression.

Les injecteurs 64, 66, 68 peuvent comporter, par exemple à la suite de la première section 80 dans le sens de l'écoulement du flux d'air F2 sous pression, une deuxième section 82 dont le diamètre interne est constant le long du trajet du flux d'air F2 sous pression.

Ainsi, la deuxième section 82 des injecteurs 64, 66, 68 a une forme cylindrique.

Les injecteurs 64, 66, 68 peuvent comporter, par exemple à la suite de la deuxième section 82 dans le sens de l'écoulement du flux d'air F2 sous pression, une troisième section 84 dont le diamètre interne augmente le long du trajet du flux d'air F2 sous pression.

Le diamètre interne de la troisième section 84 varie de façon progressive.

Ainsi, la troisième section 84 des injecteurs 64, 66, 68 a une forme tronconique. Autrement dit, la troisième section 84 forme une partie conique divergente dans le sens du flux d'air F2 sous pression.

Les injecteurs 64, 66, 68 peuvent comporter, par exemple préalablement à la première section 80 dans le sens de l'écoulement du flux d'air F2 sous pression, une quatrième section 86 dont le diamètre interne est constant le long du trajet du flux d'air F2 sous pression.

Comme représenté sur la figure 5, la quatrième section 86 peut comporter la forme de coude des injecteurs intermédiaires 66 et externes 68.

Un injecteur 64, 66, 68 peut être configuré pour présenter une restriction de section de manière à augmenter la vitesse du flux d'air F2. Autrement dit, la section des injecteurs 64, 66, 68 peut se réduire pour transformer la haute pression du flux d'air F2 sous pression en vitesse élevée dudit flux d'air F2 sous pression.

La figure 6 représente les étapes du procédé de refroidissement des freins 42 du train d'atterrissage 10 tel que décrit précédemment.

Le procédé comprend une étape S10 de compression d'un flux d'air de manière à générer un flux d'air F2 sous pression. En particulier, l'étape S10 de compression est réalisée au moyen du compresseur 52, le compresseur 52 étant notamment un compresseur électrique. L'étape S10 de compression peut être une compression d'un flux d'air de manière à générer un faible débit d'air à haute pression.

Le procédé comprend également une étape S20 d'acheminement du flux d'air F2 sous pression jusqu'à la zone à proximité des freins 42. En particulier, l'étape S20 d'acheminement est réalisée au moyen du tube de trompe 62.

Le procédé comprend une étape S30 d'injection du flux d'air F2 sous pression dans la zone à proximité des freins 42. En particulier, l'étape S30 d'injection est réalisée au moyen du ou de chaque injecteur 64, 66, 68.

Le procédé comprend également une étape S40 d'aspiration du flux d'air F1 de la zone à proximité des freins 42.

En particulier, l'injection du flux d'air F2 sous pression dans la zone à proximité des freins permet d'engendrer une dépression dans la zone à proximité des freins 42, ce qui permet au flux d'air F1 provenant des freins d'être aspiré.

## Revendications

1. Système de refroidissement (50) des freins (42) d'un système de freinage (40) d'un train d'atterrissage (10) d'un aéronef, comprenant :
- un compresseur (52) configuré pour générer un flux d'air (F2) sous pression, ledit compresseur (52) comprenant au moins une sortie d'air (54), et
- une trompe à air (60) comprenant :
- un tube de trompe (62) comprenant une première extrémité reliée à ladite sortie d'air (54) et une deuxième extrémité, ledit tube de trompe (62) étant conformé pour acheminer ledit flux d'air (F2) sous pression entre les première et deuxième extrémités,
**caractérisé en ce que** la trompe à air comprend une pluralité d'injecteurs (64, 66, 68) reliée à ladite deuxième extrémité du tube de trompe (62), et configurée pour injecter ledit flux d'air (F2) sous pression, et dans lequel la pluralité d'injecteurs (64, 66, 68) comprend un injecteur central (64) agencé dans le prolongement de la deuxième extrémité du tube de trompe (62) et une pluralité d'injecteurs intermédiaires (66) agencés sur 360° autour dudit injecteur central (64).

2. Système de refroidissement (50) selon la revendication précédente, dans lequel chaque injecteur (64, 66, 68) présente une restriction de section le long du trajet du flux d'air (F2) sous pression.

3. Système de refroidissement (50) selon l'une des revendications précédentes, dans lequel la pluralité d'injecteurs (64, 66, 68) est agencée circonférentiellement et centrée sur la deuxième extrémité du tube de trompe (62).

4. Système de refroidissement (50) selon l'une des revendications précédentes, dans lequel la pluralité d'injecteurs (64, 66, 68) comprend une pluralité d'injecteurs externes (68) agencés sur 360° autour desdits injecteur intermédiaires (66).

5. Système de refroidissement (50) selon la revendication précédente, dans lequel la pluralité d'injecteurs externes (68) et la pluralité d'injecteurs intermédiaires (66) sont agencées en quinconce autour de la deuxième extrémité du tube de trompe (62).

6. Système de refroidissement (50) selon l'une des revendications précédentes, dans lequel au moins un ou chaque injecteur (64, 66, 68) est en forme de coude.

7. Système de refroidissement (50) selon l'une des revendications précédentes, dans lequel le compresseur (52) est un compresseur électrique.

8. Train d'atterrissage (10) d'un aéronef comportant :
- au moins une roue (20), et
- un système de freinage (40) comprenant des freins (42) adaptés pour ralentir ou arrêter la rotation de ladite au moins une roue (20),
**caractérisé en ce qu'**il comprend également un système de refroidissement (50) selon l'une des revendications précédentes.

9. Train d'atterrissage (10) selon la revendication 8, dans lequel le compresseur (52) du système de refroidissement (50) est agencé à distance d'une zone à proximité des freins (42).

10. Train d'atterrissage (10) selon l'une des revendications 8 ou 9, dans lequel chaque injecteur (64, 66, 68) est agencé à l'extérieur d'une jante de la roue (20).

11. Train d'atterrissage (10) selon l'une des revendications 8 ou 9, dans lequel chaque injecteur (64, 66, 68) est agencé à l'intérieur d'une jante de la roue (20).

12. Procédé de refroidissement des freins (42) d'un système de freinage (40) d'un train d'atterrissage (10) d'un aéronef selon l'une des revendications 8 à 11, comprenant les étapes consistant en :
- une compression (S10), au moyen du compresseur (52), d'un flux d'air de manière à générer un flux d'air (F2) sous pression,
- un acheminement (S20) du flux d'air (F2) sous pression, au moyen du tube de trompe (62), jusqu'à une zone à proximité des freins (42),
- une injection (S30), au moyen de chaque injecteur (64, 66, 68), du flux d'air (F2) sous pression dans ladite zone à proximité des freins (42), et
- une aspiration (S40) d'un flux d'air (F1) de ladite zone à proximité des freins (42).

## Patentansprüche

1. System (50) zum Kühlen der Bremsen (42) eines Bremssystems (40) eines Fahrwerks (10) eines Luftfahrzeugs, umfassend:
- einen Verdichter (52), der konfiguriert ist, um einen Luftstrom (F2) unter Druck zu erzeugen, wobei der Verdichter (52) mindestens einen Luftauslass (54) umfasst, und
- eine Luftstrahlpumpe (60), umfassend:
- ein Pumpenrohr (62), das ein erstes Ende, das mit dem Luftauslass (54) verbunden ist, und ein zweites Ende umfasst, wobei das Pumpenrohr (62) ausgebildet ist, um den Luftstrom (F2) unter Druck zwischen dem ersten und dem zweiten Ende zu leiten,
**dadurch gekennzeichnet, dass** die Luftstrahlpumpe eine Vielzahl von Einspritzdüsen (64, 66, 68) umfasst, die mit dem zweiten Ende des Pumpenrohrs (62) verbunden sind und konfiguriert sind, um den Luftstrom (F2) unter Druck einzuspritzen, und wobei die Vielzahl von Einspritzdüsen (64, 66, 68) eine zentrale Einspritzdüse (64), die in der Verlängerung des zweiten Endes des Pumpenrohrs (62) angeordnet ist, und eine Vielzahl von Zwischeneinspritzdüsen (66) umfasst, die um 360° um die zentrale Einspritzdüse (64) herum angeordnet sind.

2. Kühlsystem (50) nach dem vorstehenden Anspruch, wobei jede Einspritzdüse (64, 66, 68) eine Querschnittsverengung entlang des Weges des Luftstroms (F2) unter Druck aufweist.

3. Kühlsystem (50) nach einem der vorstehenden Ansprüche, wobei die Vielzahl von Einspritzdüsen (64, 66, 68) umfangsmäßig angeordnet und auf das zweite Ende des Pumpenrohrs (62) zentriert ist.

4. Kühlsystem (50) nach einem der vorstehenden Ansprüche, wobei die Vielzahl von Einspritzdüsen (64, 66, 68) eine Vielzahl von äußeren Einspritzdüsen (68) umfasst, die um 360° um die Zwischeneinspritzdüsen (66) herum angeordnet sind.

5. Kühlsystem (50) nach dem vorstehenden Anspruch, wobei die Vielzahl von äußeren Einspritzdüsen (68) und die Vielzahl von Zwischeneinspritzdüsen (66) versetzt um das zweite Ende des Pumpenrohrs (62) herum angeordnet sind.

6. Kühlsystem (50) nach einem der vorstehenden Ansprüche, wobei mindestens eine oder jede Einspritzdüse (64, 66, 68) in Form einer Krümmung vorliegt.

7. Kühlsystem (50) nach einem der vorstehenden Ansprüche, wobei der Verdichter (52) ein elektrischer Verdichter ist.

8. Fahrwerk (10) eines Luftfahrzeugs, umfassend:
- mindestens ein Rad (20) und
- ein Bremssystem (40), das Bremsen (42) umfasst, die angepasst sind, um die Drehung des mindestens einen Rades (20) zu verlangsamen oder anzuhalten,
**dadurch gekennzeichnet, dass** es auch ein Kühlsystem (50) nach einem der vorstehenden Ansprüche umfasst.

9. Fahrwerk (10) nach Anspruch 8, wobei der Verdichter (52) des Kühlsystems (50) von einer Zone in der Nähe der Bremsen (42) beabstandet angeordnet ist.

10. Fahrwerk (10) nach einem der Ansprüche 8 oder 9, wobei jede Einspritzdüse (64, 66, 68) außerhalb einer Felge des Rades (20) angeordnet ist.

11. Fahrwerk (10) nach einem der Ansprüche 8 oder 9, wobei jede Einspritzdüse (64, 66, 68) innerhalb einer Felge des Rades (20) angeordnet ist.

12. Verfahren zum Kühlen der Bremsen (42) eines Bremssystems (40) eines Fahrwerks (10) eines Luftfahrzeugs nach einem der Ansprüche 8 bis 11, umfassend die Schritte, bestehend aus:
- einer Verdichtung (S10), mittels des Verdichters (52), eines Luftstroms, um einen Luftstrom (F2) unter Druck zu erzeugen,
- einem Leiten (S20) des Luftstroms (F2) unter Druck mittels des Pumpenrohrs (62) bis zu einer Zone in der Nähe der Bremsen (42),
- einem Einspritzen (S30), mittels jeder Einspritzdüse (64, 66, 68), des Luftstroms (F2) unter Druck in die Zone in der Nähe der Bremsen (42), und
- einem Ansaugen (S40) eines Luftstroms (F1) aus der Zone in der Nähe der Bremsen (42).

## Claims

1. A system (50) for cooling the brakes (42) of a brake system (40) of a landing gear (10) of an aircraft, comprising:
- a compressor (52) configured to generate a pressurized air flow (F2), said compressor (52) comprising at least one air outlet (54), and
- an air jet pump (60) comprising:
- a pump tube (62) comprising a first end connected to said air outlet (54) and a second end, said pump tube (62) being designed to convey said pressurized air flow (F2) between the first and second ends,
**characterized in that** the air jet pump comprises a plurality of injectors (64, 66, 68) connected to said second end of the pump tube (62), and configured to inject said pressurized air flow (F2), and
wherein the plurality of injectors (64, 66, 68) comprises a central injector (64) arranged as an extension of the second end of the pump tube (62) and a plurality of intermediate injectors (66) arranged 360° around said central injector (64).

2. The cooling system (50) according to the preceding claim, wherein each injector (64, 66, 68) has a cross-sectional restriction along the path of the pressurized air flow (F2).

3. The cooling system (50) according to any of the preceding claims, wherein the plurality of injectors (64, 66, 68) are arranged circumferentially and centred on the second end of the pump tube (62).

4. The cooling system (50) according to the preceding claim, wherein the plurality of injectors (64, 66, 68) comprises a plurality of external injectors (68) arranged 360° around said intermediate injectors (66).

5. The cooling system (50) according to the preceding claim, wherein the plurality of external injectors (68) and the plurality of intermediate injectors (66) are arranged in a staggered pattern around the second end of the pump tube (62).

6. The cooling system (50) according to any of the preceding claims, wherein at least one or each injector (64, 66, 68) is elbow shaped.

7. The cooling system (50) according to any of the preceding claims, wherein the compressor (52) is an electric compressor.

8. A landing gear (10) of an aircraft comprising:
- at least one wheel (20), and
- a brake system (40) comprising brakes (42) adapted to slow or stop the rotation of said at least one wheel (20)
wherein it also comprises a cooling system (50) according to one of the preceding claims.

9. The landing gear (10) according to claim 8, wherein the compressor (52) of the cooling system (50) is arranged remotely from an area near the brakes (42).

10. The landing gear (10) according to any of claims 8 or 9, wherein each injector (64, 66, 68) is arranged outside a rim of the wheel (20).

11. The landing gear (10) according to any of claims 8 or 9, wherein each injector (64, 66, 68) is arranged inside a rim of the wheel (20).

12. A method for cooling the brakes (42) of a brake system (40) of landing gear (10) of an aircraft according to any of claims 8 to 11, comprising the steps of:
- compressing (S10), by means of the compressor (52), an air flow so as to generate a pressurized air flow (F2),
- conveying (S20) the pressurized air flow (F2), by means of the pump tube (62), to an area near the brakes (42),
- injecting (S30), by means of each injector (64, 66, 68), the pressurized air flow (F2) into said area near the brakes (42), and
- sucking (S40) an air flow (F1) from said area near the brakes (42).
